# EUROPEAN PATENT SPECIFICATION

(11) **EP 4 328 565 B1**
(45) Date of publication and mention of the grant of the patent: **18.03.2026**
(21) Application number: 23184894.6
(22) Date of filing: 12.07.2023
(51) Int. Cl.: G01N 15/08

(54) **ANALYTE PERMEATION TESTING INSTRUMENT WITH TEST SAMPLE PERIPHERAL EDGE SEALING SURROUND**
ANALYTENPERMEATIONSTESTINSTRUMENT MIT EINER TESTPROBENRANDVERSIEGELUNGSEINFASSUNG
INSTRUMENT DE TEST DE PERMÉATION D'ANALYTE AVEC BORDURE D'ÉTANCHÉITÉ PÉRIPHÉRIQUE D'ÉCHANTILLON DE TEST

(30) Priority: 19.08.2022 US 202217820932
(43) Date of publication of application: 28.02.2024
(73) Proprietor: Mocon, Inc., Minneapolis, Minnesota 55428 (US)
(72) Inventor: Ascheman, Timothy A., Elk River (US); Jackson, Jeffrey L., Lino Lakes (US); Berezovskiy, Slava A., Apple Valley (US)
(74) Representative: Vossius & Partner Patentanwälte Rechtsanwälte mbB

(56) References cited:
- US-A1- 2006 236 755
- US-B1- 6 422 063

## Description

### BACKGROUND

Permeation instruments are used to measure the transmission rate of a target analyte, such as oxygen, carbon dioxide or water vapor, through a film of interest. Typical films subjected to permeation testing are polymeric packaging films such as those constructed from low density polyethylene (LDPE), high density polyethylene (HDPE), oriented polypropylene (OPP), polyethylene terepthalate (PET), polyvinylidene chrloride (PVTDC), etc. Typically, the film to be tested is positioned within a test chamber to sealing separate the chamber into first and second cells. The first cell (commonly referenced as the sensing cell) is flushed with an inert gas to remove any target analyte from the cell and the second cell (commonly referenced as the analyte cell) filled with a gas containing a known concentration of the target analyte. A sensor for the target analyte detects the presence of target analyte that has migrated into the sensing cell from the analyte cell through the film.

Permeation instruments typically employ a flow-through method or an accumulation method for sensing the presence of target analyte in the sensing cell. Briefly, the flow-through method uses an inert flushing gas to continuously pick up any target analyte that has migrated into the sensing cell and deliver it to a remote sensor. The accumulation method allows target analyte to build up in the sensing cell for an accumulation period, with the sensor either positioned within the sensing cell or the sensing cell flushed with a flushing gas after the accumulation period for delivery of accumulated target analyte to a remote sensor.

The flow through method allows virtually all sensor types to be used, but are expensive and complex systems. The accumulation method, while permitting the use of less sensitive inexpensive sensors to accurately measure permeation of a target analyte through a film even at very low transmission rates, suffers from significantly longer test times.

Electrochemical sensors are generally preferred for use in permeation instruments as they provide a number of advantages, including (i) extreme accuracy, (ii) ultra-high sensitivity to analyte, (iii) high specificity for a single analyte, (iv) lack of temperature sensitivity, (v) lack of pressure sensitivity, (vi) minimal sensitivity to flow, and (vii) low cost.

Leakage of target analyte into the sensing cell other than via permeation across the test film from the analyte cell to the sensing cell can adversely affect accuracy of the test results. To maintain testing accuracy, such leakage must be eliminated as much as reasonably possible.

One area of concern regarding leakage of target analyte into the sensing cell is edge leakage, where environmental target analyte migrates into the test film through the exposed edges of the test film followed by permeation of the environmental target analyte into the analyte-depleted sensing cell. Edge leakage is of particular concern when the test film is rather thick so as to present a meaningful area of edge exposure to the surrounding environment.

Accordingly, a substantial need exists for a system and/or method for controlling and potentially eliminating edge leakage in permeation instruments. US 2006/236755 A1 discloses an apparatus for measurement of permeation of moisture. The apparatus comprises means for heating a sample to a test temperature and for mounting the sample at the test temperature so as to provide controlled access to upstream and downstream surfaces of the sample via chambers that are also being heated. The apparatus has provision for supplying an amount of a radioactive gas to an upstream chamber where it will contact the upstream surface of the sample at a controlled relative humidity, and for circulating a very slow flow of carrier gas through the other chamber to collect the gas permeating from the downstream surface of the sample. A conduit directs the stream exiting from the downstream chamber to an ionization chamber containing a radiation monitor as mentioned above. US 6 422 063 B1 discloses a setup for measuring the permeability of micro-perforated films.

### SUMMARY OF THE INVENTION

A first aspect of the invention is an analyte permeation testing instrument with an edge leakage minimizing feature. The analyte permeation testing instrument includes a cartridge and a target analyte sensor. The cartridge defines a testing chamber operable for engaging a test film such that the testing chamber is sealingly separated by the test film into a first cell and a second cell. Specifically, the cartridge includes at least (i) a first plate defining the first cell, (ii) a second plate defining the second cell, (iii) a clamping mechanism for releasable clamping engagement of the first and second plates for changing test films, and (iv) an edge leakage minimizing feature comprising a surround around at least one of the first cell and the second cell projecting within an interface between the first and second plates for engaging a periphery of the test film placed within the interface to compress the test film and thereby form a peripheral edge seal when the plates are clamped together. The target analyte sensor is in fluid communication with the second cell for sensing target analyte found within the second cell.

A second aspect of the invention is a method of measuring permeability of a test film for a given analyte utilizing the analyte permeation testing instrument according to the first aspect of the invention. The method includes the steps of (a) separating the first and second plates, (b) placing the test film over one of the cells, (c) clamping the first and second plates together to form the testing chamber, whereby (i) the first and second cells of the testing chamber are sealingly separated by the test film, and (ii) a periphery of the test film is compressed by the surround to form a peripheral edge seal, (d) introducing an analyte containing gas into the first cell, (e) flushing the second cell with an inert gas to deplete analyte in the second cell, and (f) periodically sensing analyte in the second cell with the analyte sensor.

### BRIEF DESCRIPTION OF THE DRAWINGS

Figure 1 is a schematic overview of one embodiment of an analyte permeation testing system that includes the analyte permeation testing instrument of the present invention.
Figure 2 is an exploded top perspective view of one embodiment of the cartridge and clamping components of the analyte permeation testing instrument of the present invention.
Figure 3 is an orthographic projection of the exterior major surface of the first plate subcomponent of the cartridge with bolts inserted shown in Figure 2.
Figure 4 is an orthographic projection of the interior major surface of the first plate subcomponent of the cartridge shown in Figure 2.
Figure 5 is an orthographic projection of the exterior major surface of the second plate subcomponent of the cartridge shown in Figure 2.
Figure 6 is an orthographic projection of the interior major surface of the second plate subcomponent of the cartridge shown in Figure 2.
Figure 7 is a front view of the first and second plate subcomponents of the cartridge shown in Figure 2 sans a depiction of the bolts, longitudinal bolt orifices, and flow channels through the plates for clarity.
Figure 8 is a cross-sectional view of the of the cartridge shown in Figure 2 in a clamped state including the test film, sans a depiction of the longitudinal bolt orifices and flow channels through the plate for clarity, and depicting a servomotor as an alternative mechanism for clamping the plates together.
Figure 9 is an enlarged projection of that portion of the cartridge depicted in Figure 9 encircled by circle A.

### DETAILED DESCRIPTION OF A PREFERRED EMBODIMENT

### Nomenclature

- **01**: Source of Analyte Containing Test Gas
- **02**: Source of Analyte Depleted Inert Gas
- **10**: Analyte Permeation Testing System
- **21a**: Inlet Conduit for Directing Test Gas From the Source of Test Gas into the First Cell
- **21b**: Outlet Conduit for Venting Gas from the First Cell
- **22a**: Inlet Conduit for Directing Inert Gas From the Source of Inert Gas Into the Second Cell
- **22b₁**: Outlet Conduit for Venting Inert Gas From the Second Cell
- **22b₂**: Outlet Conduit for Directing Inert Gas From the Second Cell to the Target Analyte Sensor
- **30**: Analyte Sensor
- **40**: Computer or CPU
- **50**: Monitor
- **60**: Printer
- **70**: Electrical Leads from the Sensor to the CPU
- **100**: Cartridge
- **100a**: Front of Cartridge
- **100b**: Back of Cartridge
- **100c**: Top of Cartridge
- **100d**: Bottom of Cartridge
- **100r**: Right Side of Cartridge
- **100s**: Left Side of Cartridge
- **109**: Testing Chamber
- **110**: First Plate
- **110v**: Interior Major Surface of First Plate
- **110w**: Exterior Major Surface of First Plate
- **111**: Inlet Port for Test Gas in Fluid Communication with First Cell
- **112**: Outlet Port for Test Gas in Fluid Communication with First Cell
- **113**: Longitudinally Extending Alignment Pins
- **119**: First Cell in First Plate
- **120**: Second Plate
- **120v**: Interior Major Surface of Second Plate
- **120w**: Exterior Major Surface of Second Plate
- **121**: Inlet Port for Inert Gas in Fluid Communication with Second Cell
- **122**: Outlet Port for Inert Gas in Fluid Communication with Second Cell
- **123**: Longitudinally Extending Alignment Holes
- **129**: Second Cell in Second Plate
- **130**: Surround
- **131**: Peripheral Lip Projecting from Interior Major Surface of First Plate
- **131e**: Exposed Edge of Peripheral Lip Projecting from the First Plate
- **132**: Peripheral Lip Projecting from Interior Major Surface of Second Plate
- **132e**: Exposed Edge of Peripheral Lip Projecting from the Second Plate
- **200**: Compression Sensor
- **300**: Clamping Mechanism
- **310**: Bolts
- **311**: Longitudinal Orifices Through First Plate Circumscribing the Surround
- **312**: Threaded Longitudinal Orifices Through Second Plate Circumscribing the Surround
- **320**: Clamping Actuator
- **F**: Film Being Tested
- **x**: Lateral Direction
- **y**: Longitudinal Direction
- **z**: Transverse Direction

### Description

### OVERVIEW

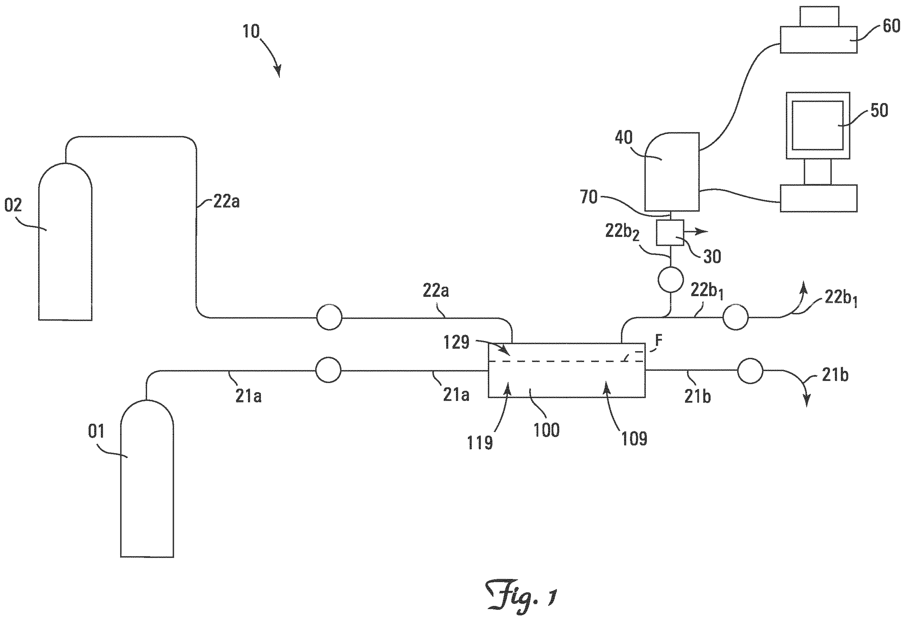

Referring generally to Figure 1, the invention is directed to cartridge **100** as a component of an analyte permeation testing instrument **10.** The analyte permeation testing instrument **10** includes at least a target analyte sensor **30** and the cartridge **100.** The cartridge **100** is equipped with an edge leakage minimizing feature.

The cartridge **100** defines a testing chamber **109** operable for engaging a test film **F** such that the testing chamber **109** is sealingly separated by the test film **F** into a first cell **119** and a second cell **129.** Specifically, the cartridge **100** can include at least (i) a first plate **110** defining the first cell **119,** (ii) a second plate **120** defining the second cell **129,** (iii) a clamping mechanism **320** for releasable clamping of the first and second plates **110** and **120** for changing test films **F,** and (iv) an edge leakage minimizing feature comprising a surround **130** around at least one of the first cell **119** and the second cell **129** projecting within an interface (unnumbered) between the first and second plates **110** and **120** for engaging a periphery of the test film **F** placed within the interface to compress the test film **F** and thereby form a peripheral edge seal (unnumbered) when the plates **110** and **120** are clamped together. The target analyte sensor **30** is in fluid communication with the second cell **129** for sensing target analyte which has permeated through the test film **F** from the first cell **119** into the second cell **129.**

### CONSTRUCTION

An exemplary embodiment of a system capable of measuring the transmission rate of a target analyte through a test film **F** utilizing the analyte permeation testing instrument **10** is depicted in Figure 1. The cartridge **100** defines a testing chamber **109** sealingly divided by a film **F** to be tested into a first cell **119** and a second cell **129.**

A source of test gas **01** containing a known concentration of a target analyte, communicates with the first cell **119** via inlet conduit **21a** for continuously providing the first cell **119** with test gas to ensure that the concentration of target analyte within the first cell **119** remains constant throughout a test period. Test gas within the first cell **119** exits via outlet conduit **21b.**

A source of an inert gas **02** communicates with the second cell **129** via inlet conduit **22a** for flushing the first cell **119** prior to testing and then during testing carrying target analyte which has permeated through the test film **F** from the first cell **119** into the second cell **129** to the target analyte sensor **30.** Inert gas within the second cell **129** exits via outlet conduit **22b,** which splits for selectively and alternatively venting the inert gas directly to atmosphere through conduit **22b₁** during flushing of the second cell **129** prior to testing, or directing the inert gas through conduit **22b₂** into target analyte sensor **30** for measurement of target analyte during testing. Suitable inert gases include specifically, but not exclusively, nitrogen, argon, helium, krypton, a blend of nitrogen and hydrogen, etc.

Channels (not shown) in the cartridge **100** and a flow control system (not separately numbered) are provided for directing and controlling the flow of test gas into and out from the first cell **119** and inert gas into and out from the second cell **129.**

Shutoff valves (unnumbered) can be provided in inlet conduit **21a** and outlet conduit **21b** respectively, for controlling the flow of test gas through the first cell **119.** Similarly, shutoff valves (unnumbered) can be provided in the inlet conduit **22a** and outlet conduit **22b** respectively for controlling the flow of inert gas through the second cell **129.** A separate shutoff valve can be placed in each branch **22b₁** and **22b₂** of the outlet conduit **22** for selectively and alternatively directing flow of inert gas exiting the second cell **129** directly to atmosphere through conduit **22b₁** during flushing of the upper cell **129** prior to testing or through conduit **22b₂** into sensor **30** for measurement of target analyte during testing.

Referring to Figure 1, the target analyte sensor **30** for sensing target analyte is placed in fluid communication with the second cell **129** for sensing the presence of target analyte within the second cell **129.** Typical target analytes of interest include oxygen, carbon dioxide and water vapor. The target analyte sensor **30** may be selected from any of the wide variety of commercially available sensors capable of detecting the target analyte of interest, with electrochemical sensors generally preferred based upon the high sensitivity and low cost of such sensors and the fact that such sensors, when employed in the present invention, follow Faraday's Law - eliminating the need to calibrate the sensor.

The target analyte sensor **30** communicates via electrical leads **70** with a suitable central processing unit **40** equipped with electronic memory (not shown) for storing, and optionally but preferably a monitor **50** and/or printer **60** for reporting target analyte concentrations detected by the target analyte sensor **30.**

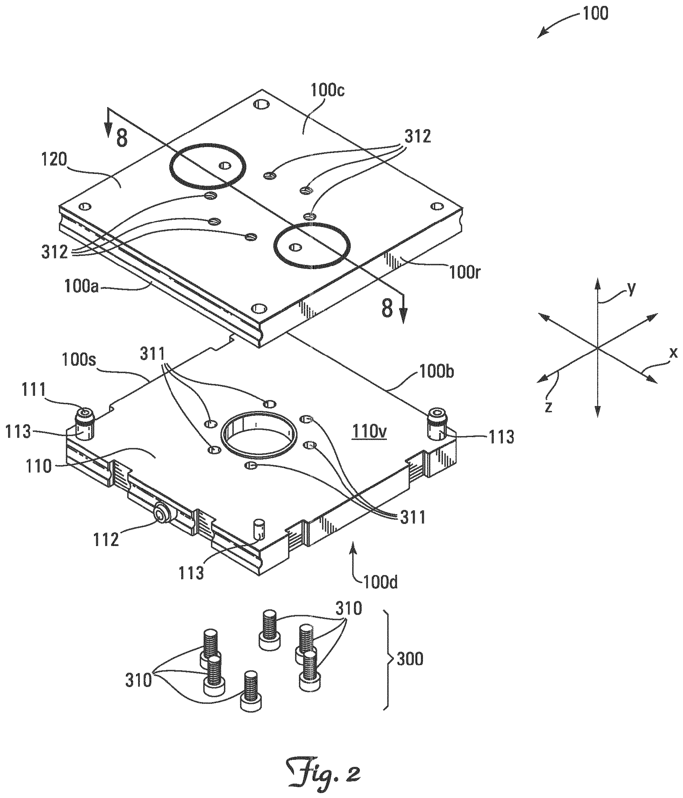

Referring generally to Figure 2, the cartridge **100,** formed from the first **110** and second **120** plates, has a lateral **x** width extending from a right side **100r** to a left side **100s,** a longitudinal **y** thickness extending from a top major surface **100c** to a bottom major surface **100d,** and a transverse **z** length extending from a front edge **100a** to a back edge **100b.**

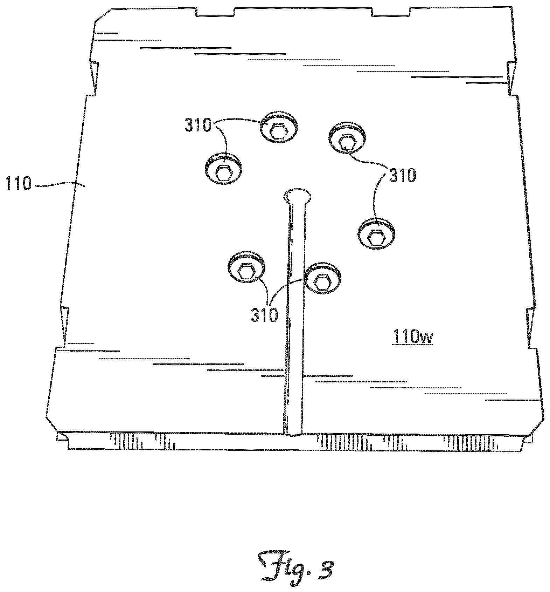

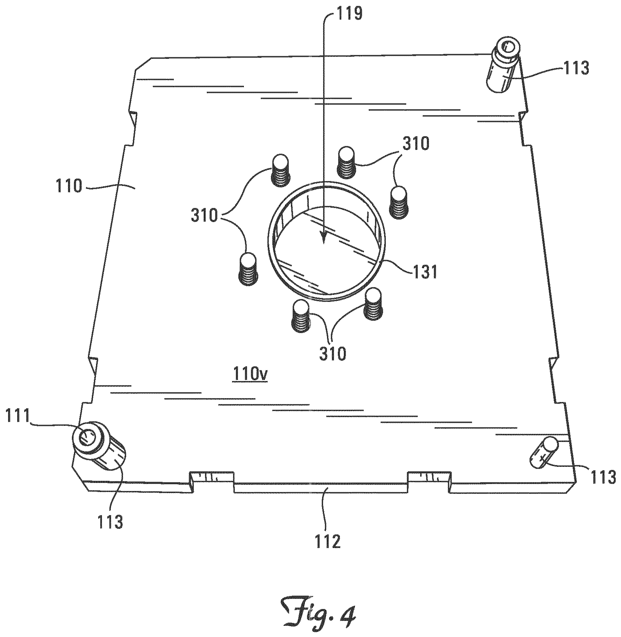

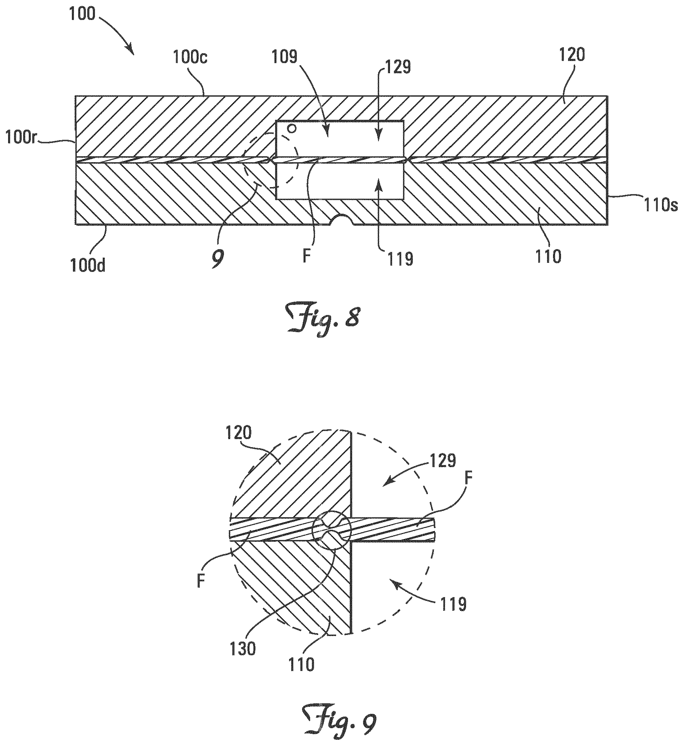

Referring generally to Figures 2, 3, 4, 7 and 8, the first plate **110** has an interior major surface **110v** which faces the second plate **120** when the plates **110** and **120** are clamped together to form the cartridge **100,** and an exterior major surface **110w** which is the bottom major surface **100d** of the cartridge **100** when the plates **110** and **120** are clamped together to form the cartridge **100.**

Inlet and outlet ports **111** and **112** in the first plate **110** are configured and arranged for fluid connection to inlet conduit **21a** and outlet conduit **21b** respectively, for directing test gas into and out from the first cell **119.**

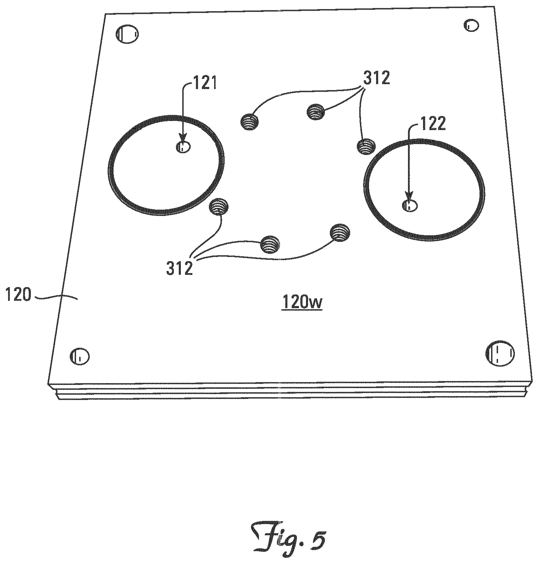

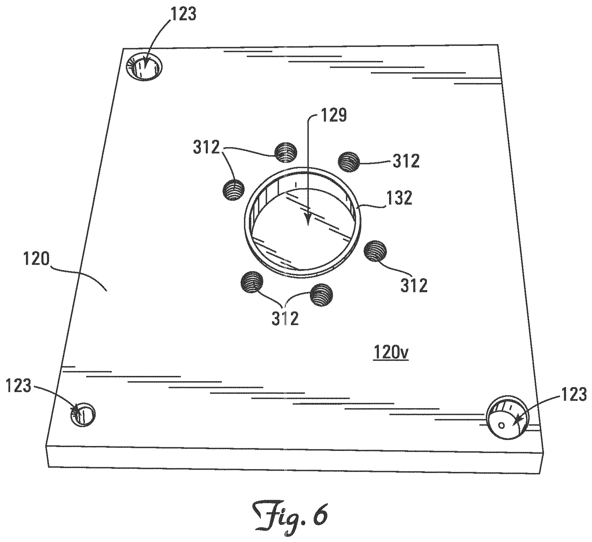

Referring generally to Figures 2, 5, 6, 7 and 8, in similar fashion the second plate **120** has an interior major surface **120v** which faces the first plate **110** when the plates **110** and **120** are clamped together to form the cartridge **100,** and an exterior major surface **120w** which is the top major surface **100c** of the cartridge **100** when the plates **110** and **120** are clamped together to form the cartridge **100.**

Inlet and outlet ports **121** and **122** in the second plate **120** are configured and arranged for fluid connection to inlet conduit **22a** and outlet conduit **22b** respectively, for directing inert gas into and out from the second cell **129.**

The first and second plates **110** and **120** each preferably comprise a unitary metal piece to eliminate cracks, seams, joints and fissures through the plate **110** or **120** and into fluid communication with the respective cells **119** and **129.**

Referring generally to Figures 2, 4, 6 and 7, a set of alignment pins **113** extend longitudinally **y** out from the interior major surface **110v** of the first plate **110** and corresponding alignment holes **123,** configured and arranged to accept insertion of the alignment pins **113,** extend longitudinally **y** into the second plate **120** from the interior major surface **120v** of the second plate **120.** The alignment pins **113** and alignment holes **123** ensure a proper and consistent alignment and rotational orientation of the plates **110** and **120** relative to one another. Alternatively, placement of the alignment pins **113** and alignment holes **123** on the first and second plates **110** and **120,** can be reversed.

Referring generally to Figures 2, 4, 6, 7, 8 and 9, an edge leakage minimizing feature comprising a surround **130** is positioned within the interface between the first and second plates **110** and **120,** for engaging and compressing a periphery of the test film **F** around the testing chamber **109** when the plates **110** and **120** are clamped together. Compression of the test film **F** around the testing chamber **109** forms a peripheral edge seal around the testing chamber **109** so as to control leakage of target analyte into the second cell **129** and thereby ensure that target analyte found within the second cell **129** permeated across the test film **F** from the first cell **119** to the second cell **129.**

The surround 130 is unitarily formed from a solid block of material with the first and/or second plate **110** and/or **120.**

In a preferred embodiment, the surround **130** is a peripheral lip **131** projecting longitudinally **y** from the interior major surface **110v** of the first plate **110** towards the interior major surface **120v** of the second plate **120,** or alternatively a peripheral lip **132** projecting longitudinally **y** from the interior major surface **120v** of the second plate **120** towards the interior major surface **110v** of the first plate **110.** Most preferably, the surround **130** is comprised of peripheral lips **131** and **132** projecting longitudinally **y** from the interior major surfaces **110v** and **120v** of the first plate **110** and second plate **120,** respectively, with the peripheral lips **131** and **132** aligned so that the exposed edges **131e** and **132e** of the peripheral lips **131** and **132,** respectively, would contact and abut one another around the entire periphery of the testing chamber **109** when the plates **110** and **120** are clamped together without an inserted testing film **F.** The exposed edges **131e** and **132e** of the peripheral lips **131** and **132** are preferably rounded to provide a radially narrow peripheral line of contact.

Any of the well known and readily available compressing and clamping devices may be used as the clamping mechanism **300** to clamp the plates **110** and **120** together, including specifically but not exclusively manually-operated lever and rotary mechanical actuators such as a plurality of bolts **310** and bolt holes **311** (pass through) and **312** (threaded) through the plates **110** and **120** respectively, circumscribing the first and second cells **119** and **129** respectively, electromechanical actuators such as a servomotor **320,** pneumatic actuators, and hydraulic actuators.

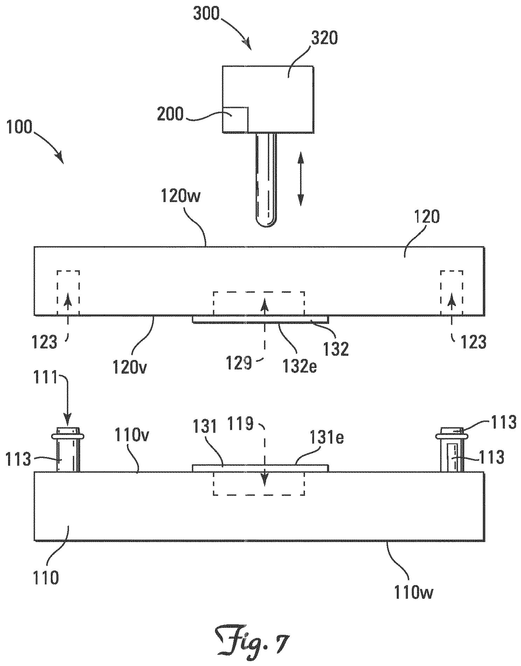

Referring generally to Figure 7, a compression sensor **200** can be employed to sense and report the clamping pressure and/or force exerted upon and/or experience by the plates **110** and **120,** and reporting the value to the controller **40** for maintaining a consistent compression pressure and/or force for each test film **F.**

### USE

The first and second plates **110** and **120** are separated and a sample of film **F** to be tested placed over the first cell **109** in the first plate **110** so as to circumferentially extend over the entire periphery of the peripheral lip **131** encircling the first cell **109.**

The second plate **120** is then placed back atop the first plate **110** and secured to the first plate **110** so as to sealingly clamp the film **F** between the peripheral lips **131** and **132** on the plates **110** and **120** respectively, thereby compressing the film **F** between the peripheral lips **131** and **132** so as to create an edge seal and sealingly separate the first cell **119** and second cell **129** from one another as well as the surrounding environment, with a known area of the film **F** exposed to both cells **119** and **129,** hereinafter referenced as a "loaded" cartridge **100.**

Shutoff valves (unnumbered) along conduits **22a** and **22b₁** are then opened to permit the flow of inert gas from the source of analyte depleted inert gas **02** through the second cell **129** and out to the surrounding environment for flushing analyte from the second cell **129.** After flushing, shutoff valve along conduit **22b₁** is closed and shutoff valve along conduit **22b₂** is open to direct gas flow from the second cell **129** through the analyte sensor **30.** The presence of analyte within the second cell **129** is thereby detected and recorded.

Shutoff valves (unnumbered) along conduits **21a** and **21b** are then opened to permit the flow of gas from the source of gas containing a known concentration of analyte **01** into the first cell **119.**

Target analyte will permeate through the film F as the analyte seeks to diffuse through the **film F** from a region of higher concentration (*i.e.,* the first cell **119)** to a region of lower concentration (*i.e.,* the second cell **129).** Since test gas continuously flows through the first cell **119** the concentration of target analyte in the region of higher concentration remains constant throughout the relevant test period. Similarly, since inert gas continuously flows through the second cell **129** for carrying a target analyte within the second cell **129** to the analyte sensor **30,** the concentration of target analyte in the region of lower concentration also remains constant at near zero throughout the relevant test period.

Eventually, the system will reach a steady state condition where the rate at which analyte is detected in the second cell **129** by the analyte sensor **30** and reported by the central processing unit **40** remains constant. By ensuring that the only route by which analyte can enter into the second cell **129** is through the "exposed" area of the film **F,** this steady state rate equates directly to the permeation rate for the film **F** for the "exposed" area of the film **F.**

## Claims

1. An analyte permeation testing instrument, comprising:
(a) a cartridge (100) defining a testing chamber (109) operable for engaging a test film (F) such that the testing chamber (109) is sealingly separated by the test film (F) into a first cell (119) and a second cell (129), the cartridge (100) including at least:
(1) a first plate (110) defining the first cell (119),
(2) a second plate (120) defining the second cell (129),
(3) a clamping mechanism (300) for releasable clamping engagement of the first and second plates (110, 120) for changing test films, and
(4) a surround (130) unitarily formed from a solid block of material with at least one of the first and second plates (110, 120), extending around the entire periphery of at least one of the first cell (119) and the second cell (129), and projecting within an interface between the first and second plates (110, 120) for engaging a periphery of the test film (F) placed within the interface to compress the test film (F) and thereby form a peripheral edge seal when the plates (110, 120) are clamped together, and
(b) a sensor (30) for sensing a target analyte in fluid communication with the second cell.

2. The analyte permeation testing instrument of claim 1 wherein (i) the first and second cells (119, 129) are spaced in a longitudinal direction, and (ii) the surround (130) is comprised of a pair of longitudinally aligned and longitudinally raised peripheral lips (131, 132) with one lip of the pair of lips projecting from each of the first and second plates.

3. The analyte permeation testing instrument of claim 2 wherein the peripheral lips (131, 132) each have a rounded longitudinal facing exposed edge.

4. The analyte permeation testing instrument of claim 2 wherein (i) the first plate (110) and associated peripheral lip are unitarily formed from a solid block of metal, and (ii) the second plate (120) and associated peripheral lip are unitarily formed from a solid block of metal.

5. The analyte permeation testing instrument of claim 1 wherein the clamping mechanism (300) is a plurality bolts slidably engaged through orifices in one of the first and second plates and threadably engaged within corresponding orifices in the other of the first and second plates (110, 120), the orifices circumscribing the surround.

6. The analyte permeation testing instrument of claim 1 wherein the clamping mechanism (300) is an electromechanical actuator operable for pressing one of the first or second plate (110, 120) against the other first or second plate (110, 120).

7. The analyte permeation testing instrument of claim 6 further comprising a compression sensor (200) and control unit (40) for sensing and controlling the compression force of the one plate against the other plate.

8. The analyte permeation testing instrument of claim 1 wherein the sensor (30) is an oxygen sensor.

9. The analyte permeation testing instrument of claim 1 wherein the sensor (30) is a carbon dioxide sensor.

10. The analyte permeation testing instrument of claim 1 wherein the sensor (30) is a water vapor sensor.

11. A method of measuring permeability of a test film (F) for a given analyte utilizing the analyte permeation testing instrument of claim 1, comprising:
(a) separating the first and second plates (110, 120),
(b) placing the test film over one of the cells (119, 129),
(c) clamping the first and second plates (110, 120) together to form the testing chamber (109), whereby (i) the first and second cells (119, 129) of the testing chamber (109) are sealingly separated by the test film (F), and (ii) a periphery of the test film (F) is compressed by the surround to form a peripheral edge seal,
(d) introducing an analyte containing gas into the first cell (119),
(e) flushing the second cell (129) with an inert gas to deplete analyte in the second cell (129), and
(f) periodically sensing analyte in the second cell (129) with the analyte sensor (30).

## Patentansprüche

1. Analyt-Permeationsprüfgerät, umfassend:
(a) eine Kartusche (100), die eine Prüfkammer (109) definiert, welche dafür ausgelegt ist, mit einer Testfolie (F) in Wirkverbindung zu treten, so dass die Prüfkammer (109) durch die Testfolie (F) dicht in eine erste Zelle (119) und eine zweite Zelle (129) unterteilt wird, wobei die Kartusche (100) zumindest Folgendes umfasst:
(1) eine erste Platte (110), die die erste Zelle (119) definiert,
(2) eine zweite Platte (120), die die zweite Zelle (129) definiert,
(3) einen Klemmmechanismus (300) zum lösbaren Klemmen der ersten und zweiten Platte (110, 120) zum Wechseln der Testfolien, und
(4) eine Umrandung (130), die einstückig aus einem massiven Materialblock mit zumindest einer der ersten und zweiten Platte (110, 120) ausgebildet ist und die sich um den gesamten Umfang von zumindest einer der ersten Zelle (119) und der zweiten Zelle (129) erstreckt und innerhalb einer Schnittstelle zwischen der ersten und zweiten Platte (110, 120) vorspringt, um mit einem Randbereich der in der Schnittstelle angeordneten Testfolie (F) in Wirkverbindung zu treten, um die Testfolie (F) dadurch zu komprimieren und eine periphere Randabdichtung zu bilden, wenn die Platten (110, 120) zusammengeklemmt sind; und
(b) einen Sensor (30) zum Erfassen eines Zielanalyten in Fluidverbindung mit der zweiten Zelle.

2. Analyt-Permeationsprüfgerät nach Anspruch 1, wobei (i) die erste und zweite Zelle (119, 129) in Längsrichtung beabstandet sind und (ii) die Umrandung (130) ein Paar von längs ausgerichteten und längs hervorstehenden Randlippen (131, 132) umfasst, wobei jeweils eine Lippe des Paares von der ersten bzw. der zweiten Platte hervorragt.

3. Analyt-Permeationsprüfgerät nach Anspruch 2, wobei die Randlippen (131, 132) jeweils eine abgerundete, einander in Längsrichtung zugewandte freiliegende Kante aufweisen.

4. Analyt-Permeationsprüfgerät nach Anspruch 2, wobei (i) die erste Platte (110) und die zugehörige Randlippe einstückig aus einem massiven Metallblock ausgebildet sind und (ii) die zweite Platte (120) und die zugehörige Randlippe einstückig aus einem massiven Metallblock ausgebildet sind.

5. Analyt-Permeationsprüfgerät nach Anspruch 1, wobei der Klemmmechanismus (300) eine Mehrzahl von Schrauben ist, die verschieblich durch Öffnungen in einer der ersten oder zweiten Platte geführt sind und in entsprechenden Öffnungen in der jeweils anderen der ersten und zweiten Platten (110, 120) in Gewindeeingriff stehen, wobei die Öffnungen die Umrandung umgeben.

6. Analyt-Permeationsprüfgerät nach Anspruch 1, wobei der Klemmmechanismus (300) ein elektromechanischer Aktuator ist, der zum Anpressen einer der ersten oder zweiten Platte (110, 120) an die jeweils andere der ersten oder zweiten Platte (110, 120) ausgelegt ist.

7. Analyt-Permeationsprüfgerät nach Anspruch 6, ferner umfassend einen Drucksensor (200) und eine Steuereinheit (40) zum Erfassen und Steuern der Anpresskraft, mit der die eine Platte gegen die andere Platte gedrückt wird.

8. Analyt-Permeationsprüfgerät nach Anspruch 1, wobei der Sensor (30) ein Sauerstoffsensor ist.

9. Analyt-Permeationsprüfgerät nach Anspruch 1, wobei der Sensor (30) ein Kohlendioxidsensor ist.

10. Analyt-Permeationsprüfgerät nach Anspruch 1, wobei der Sensor (30) ein Wasserdampfsensor ist.

11. Verfahren zur Messung der Permeabilität einer Testfolie (F) für einen gegebenen Analyten unter Verwendung des Analyt-Permeationsprüfgeräts nach Anspruch 1, umfassend:
(a) Trennen der ersten und zweiten Platten (110, 120),
(b) Platzieren der Testfolie (F) über eine der Zellen (119, 129),
(c) Zusammenklemmen der ersten und zweiten Platte (110, 120) zur Bildung der Prüfkammer (109), wobei (i) die erste und zweite Zelle (119, 129) der Prüfkammer (109) durch die Testfolie (F) dicht getrennt sind und (ii) ein Randbereich der Testfolie (F) durch die Umrandung komprimiert wird, um eine periphere Randabdichtung zu bilden,
(d) Einleiten eines analytenhaltigen Gases in die erste Zelle (119),
(e) Spülen der zweiten Zelle (129) mit einem Inertgas, um den Analyten in der zweiten Zelle (129) zu entfernen, und
(f) periodisches Erfassen des Analyten in der zweiten Zelle (129) mit dem Analyt-Sensor (30).

## Revendications

1. Instrument d'essai de perméation d'analyte, comprenant :
(a) une cartouche (100) définissant une chambre d'essai (109) apte à recevoir un film d'essai (F), de sorte que la chambre d'essai (109) est séparée de manière étanche par le film d'essai (F) en une première cellule (119) et une seconde cellule (129), la cartouche (100) comprenant au moins :
(1) une première plaque (110) définissant la première cellule (119),
(2) une seconde plaque (120) définissant la seconde cellule (129),
(3) un mécanisme de serrage (300) destiné à assurer un serrage amovible de la première et de la seconde plaques (110, 120) pour le remplacement des films d'essai, et
(4) un pourtour (130) formé d'une seule pièce à partir d'un bloc massif de matériau avec au moins l'une des première et seconde plaques (110, 120), s'étendant sur toute la périphérie d'au moins l'une de la première cellule (119) et de la seconde cellule (129), et faisant saillie à l'intérieur d'une interface entre les première et seconde plaques (110, 120) pour coopérer avec une périphérie du film d'essai (F) disposé dans l'interface afin de comprimer le film d'essai (F) et de former ainsi un joint périphérique étanche lorsque les plaques (110, 120) sont serrées l'une contre l'autre, et
(b) un capteur (30) destiné à détecter un analyte cible en communication fluidique avec la seconde cellule.

2. Instrument d'essai de perméation d'analyte selon la revendication 1, dans lequel (i) la première et la seconde cellules (119, 129) sont espacées dans une direction longitudinale, et (ii) le pourtour (130) est constitué d'une paire de lèvres périphériques (131, 132) alignées longitudinalement et surélevées longitudinalement, l'une des lèvres de la paire faisant saillie à partir de chacune des première et seconde plaques.

3. Instrument d'essai de perméation d'analyte selon la revendication 2, dans lequel chacune des lèvres périphériques (131, 132) présente un bord exposé arrondi orienté vers l'autre longitudinalement.

4. Instrument d'essai de perméation d'analyte selon la revendication 2, dans lequel (i) la première plaque (110) et la lèvre périphérique associée sont formées d'une seule pièce à partir d'un bloc massif de métal, et (ii) la seconde plaque (120) et la lèvre périphérique associée sont formées d'une seule pièce à partir d'un bloc massif de métal.

5. Instrument d'essai de perméation d'analyte selon la revendication 1, dans lequel le mécanisme de serrage (300) comprend une pluralité de boulons engagés de manière coulissante à travers des orifices pratiqués dans l'une des première et seconde plaques et engagés de manière filetée dans des orifices correspondants de l'autre des première et seconde plaques (110, 120), les orifices entourant le pourtour.

6. Instrument d'essai de perméation d'analyte selon la revendication 1, dans lequel le mécanisme de serrage (300) est un actionneur électromécanique apte à presser l'une des première ou seconde plaques (110, 120) contre l'autre des première ou seconde plaques (110, 120).

7. Instrument d'essai de perméation d'analyte selon la revendication 6, comprenant en outre un capteur de compression (200) et une unité de commande (40) destinés à détecter et à contrôler la force de compression de l'une des plaques contre l'autre plaque.

8. Instrument d'essai de perméation d'analyte selon la revendication 1, dans lequel le capteur (30) est un capteur d'oxygène.

9. Instrument d'essai de perméation d'analyte selon la revendication 1, dans lequel le capteur (30) est un capteur de dioxyde de carbone.

10. Instrument d'essai de perméation d'analyte selon la revendication 1, dans lequel le capteur (30) est un capteur de vapeur d'eau.

11. Procédé de mesure de la perméabilité d'un film d'essai (F) à un analyte donné à l'aide de l'instrument d'essai de perméation d'analyte selon la revendication 1, comprenant :
(a) la séparation des première et seconde plaques (110, 120),
(b) la mise en place du film d'essai (F) sur l'une des cellules (119, 129),
(c) le serrage des première et seconde plaques (110, 120) l'une contre l'autre afin de former la chambre d'essai (109), de sorte que (i) la première et la seconde cellules (119, 129) de la chambre d'essai (109) sont séparées de manière étanche par le film d'essai (F), et (ii) une périphérie du film d'essai (F) est comprimée par le pourtour afin de former un joint périphérique étanche,
(d) l'introduction d'un gaz contenant l'analyte dans la première cellule (119),
(e) le balayage de la seconde cellule (129) à l'aide d'un gaz inerte afin d'éliminer l'analyte de la seconde cellule (129), et
(f) la détection périodique de l'analyte dans la seconde cellule (129) au moyen du capteur d'analyte (30).
